# EUROPEAN PATENT APPLICATION

(11) **EP 2 985 004 A1**
(43) Date of publication of application: **17.02.2016**
(21) Application number: 13881656.6
(22) Date of filing: 09.10.2013
(51) Int. Cl.: A61C 9/00

(54) **IMPRESSION TRAY**

(30) Priority: 12.04.2013 JP 2013008256
(71) Applicant: GC Corporation, Tokyo 113-0033 (JP)
(72) Inventor: TANAKA, Masahiro, Kobe-shi Hyogo 657-0015 (JP); TANAKA, Junko, Osaka-shi Osaka 552-0015 (JP); KAMOHARA, Hiroshi, Tokyo 174-8585 (JP)
(74) Representative: Müller-Boré & Partner Patentanwälte PartG mbB
(86) International application number: PCT/JP2013/077477
(87) International publication number: WO 2014/167743

(57) **Abstract**

Provided is an impression tray which enables impressions of upper and lower jaws to be taken at the same time, and on which an impression material can be heaped stably and sufficiently.

An impression tray (10) that holds an impression material and that is inserted into an oral cavity to take an impression includes an outer frame (21) that curves and extends from a side to be arranged at an incisors side toward a side to be arranged at a molars side, an inner frame (22) that curves and extends with a predetermined distance away from the outer frame, a connecting part (23) that is a linear member that one end of which is fixed to the outer frame and another end of which is fixed to the inner frame, the connecting part keeping a positional relationship between the outer frame and the inner frame, a face material (24) that is spread over the distance between the outer frame and the inner frame, and a handle (30) that is arranged at a face of the outer frame, the face being at the side to be arranged at the incisors side. A portion of the outer frame at the incisors side is formed highest position, height of the portion being kept for no less than 2 mm and no more than 15 mm toward the molars side.

## Description

### Technical Field

This invention relates to impression trays that are used for taking impressions of patients' rows of teeth and gums in manufacturing dental prostheses, and that are for taking maxillary and mandibular impressions at the same time.

### Background Art

Generally, an impression material such as a silicone impression material and alginate impression material is used when impressions in an oral cavity are taken upon manufacturing dental prostheses in odontotherapy. Impression trays are used as tools for inserting such an impression material into an oral cavity and holding the material for taking impressions. An impression tray with an impression material heaped thereon is inserted into a patient's oral cavity: the patient bites the impression material, and thereby shapes of the patient's rows of teeth, gums and the like are copied. After the impression material cures, the impression tray is taken out of the oral cavity with holding the impression material where the shapes in the oral cavity are copied.

The impression tray described in Patent Literature 1 is a tray used for taking impressions as well. This impression tray has two frames that extend while having a predetermined distance therebetween. A membrane is spread so as to bridge these frames. The space between these frames curves correspondingly to a dental arch. The frames also have the curved shapes based on the curve of the space. A handle extends from the outer flame of two curving frames, which improves the operability when an operator takes impressions. Such an impression tray with an impression material heaped on both sides sandwiching the membrane is inserted into a patient's oral cavity, and the patient bites this inserted tray, to be able to take impressions of upper and lower jaws at the same time.

### Citation List

### Patent Literature

Patent Literature 1: Japanese Translation of PCT International Application Publication No. JP H11-505750

### Summary of Invention

### Technical Problem

It is difficult that an impression material is heaped stably and sufficiently on an impression tray as described in Patent Literature 1.

An object of the present invention is to provide an impression tray which enables impressions of upper and lower jaws to be taken at the same time, and on which an impression material can be heaped stably and sufficiently, in view of the above problem.

### Solution to Problem

The present invention will be described below. While reference numerals denoted on the drawings are also described in parentheses for easy understanding, the present invention is not limited thereto.

The present invention is an impression tray (10) that holds an impression material, the impression tray being inserted into an oral cavity to take an impression, the impression tray including an outer frame (21) that curves and extends from a side to be arranged at an incisors side toward a side to be arranged at a molars side, an inner frame (22) that curves and extends with a predetermined distance away from the outer frame, a connecting part (23) that is a linear material that one end of which is fixed to the outer frame and another end of which is fixed to the inner frame, the connecting part keeping a positional relationship between the outer frame and the inner frame, a face material (24) that is spread over the distance between the outer frame and the inner frame, and a handle (30) that is arranged at a face of the outer frame, the face being at the side to be arranged at the incisors side, wherein a portion of the outer frame at the incisors side is formed highest position, height of the portion being kept for no less than 2 mm and no more than 15 mm toward the molars side.

In the above impression tray (10), at least part of the connecting part (23) is a portion that extends parallel to a line connecting an end face of the outer frame (21) at the side to be arranged at the molars side and an end face of the inner frame (22) at the side to be arranged at the molars side.

### Advantageous Effects of Invention

According to the impression tray of the present invention, an impression material can be heaped stably and sufficiently when impressions of upper and lower jaws are taken at the same time because a part of its outer frame which is to be arranged at an incisors side is formed to be higher.

### Brief Description of Drawings

[FIG. 1] is a perspective view of an impression tray 10.
[FIG. 2] is a perspective view of the impression tray 10 seen from another view.
[FIG. 3] is a plan view of the impression tray 10.
[FIG. 4] is a view of the impression tray 10 seen in the direction denoted by an arrow IV in FIG. 3.
[FIG. 5] is a view of the impression tray 10 seen in the direction denoted by an arrow V in FIG. 3.
[FIG. 6] is an end view taken along the line VI-VI denoted in FIG. 3.

### Description of Embodiments

The above described operation and advantage of the present invention are made clear by the embodiment described as follows. The present invention will be described below based on the embodiment depicted in the drawings. However, the present invention is not limited to this embodiment.

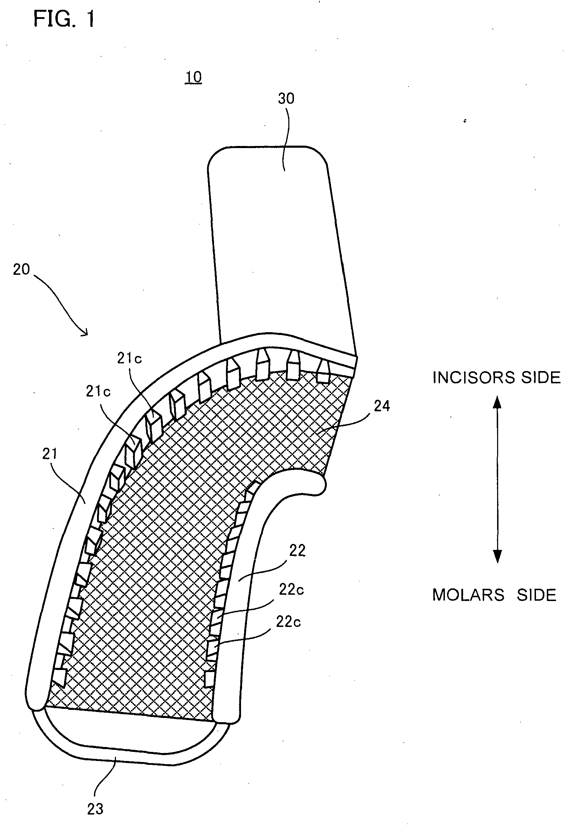

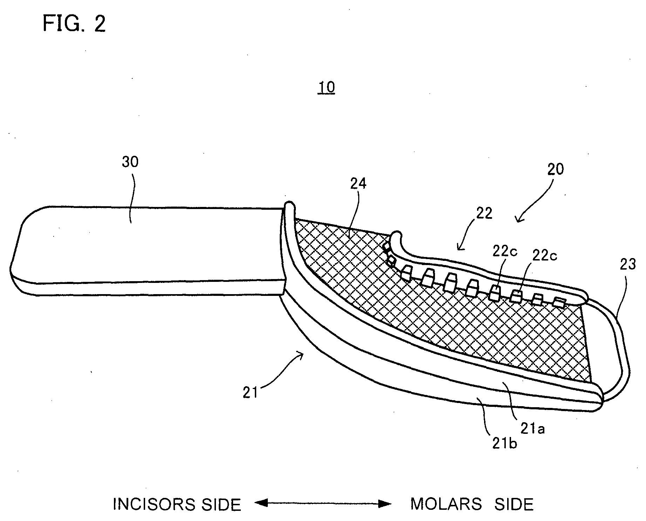

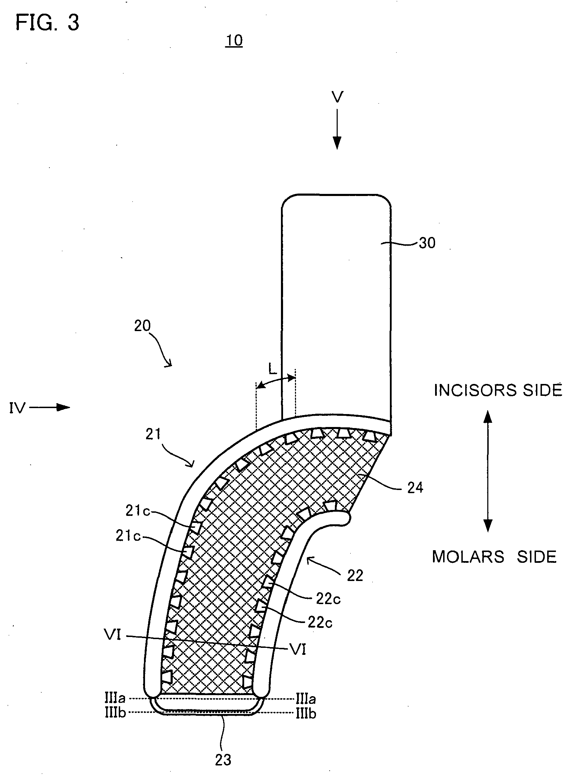

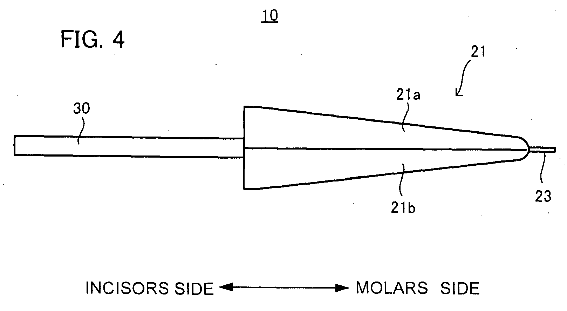

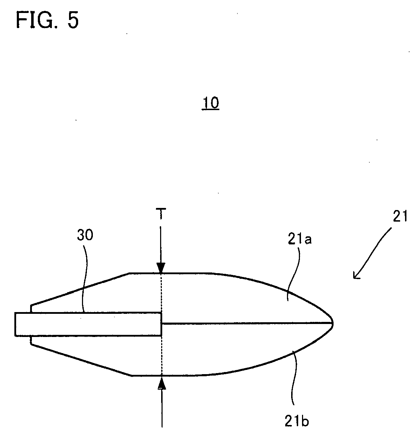

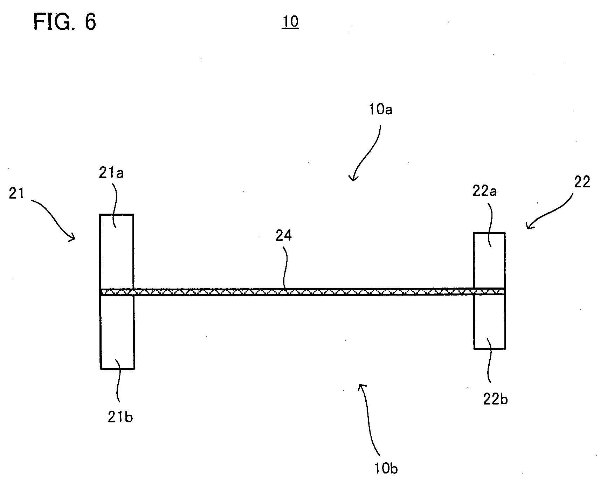

FIGS. 1 to 6 depict an impression tray 10 according to one embodiment. FIGS. 1 and 2 are perspective views of the impression tray 10 seen from different angles. FIG. 3 is a plan view of the impression tray 10. FIG. 4 is part of a side view of the impression tray 10 which is seen in the direction denoted by the arrow IV in FIG. 3. FIG. 5 is a rear view of the impression tray 10 (view seen in the direction denoted by the arrow V in FIG. 3). FIG. 6 is an end view taken along the line VI-VI denoted in FIG. 3. With reference to FIGS. 1 to 6, the impression tray 10 will be described below.

The impression tray 10 of this embodiment is an impression tray with which an impression of part of an entire dental arch is expected to be taken. Thus, as is clear from drawings, the impression tray 10 is defined to have such a shape that a shape corresponding to a dental arch is partially cut. In this embodiment, the impression tray 10 is formed so that an impression of all of either right or left half of an entire dental arch can be taken therewith. The impression tray 10 has a shape that is cut out so that a portion for taking an impression is slightly larger than half of a dental arch in the transverse direction.
Here, as is publicly known, the side of a handle 30 of the impression tray 10 is a side to be arranged at the incisors side, and a side away from the handle 30 is a side to be arranged at the molars side. Such a direction is depicted in FIGS. 1 to 4 as well (in the drawings and below, just referred to as "incisors side" and "molars side").
While the impression tray of this embodiment has a shape with which an impression of part of a dental arch is expected to be taken as described above, it is not limited to this, and may have a shape with which an impression of an entire dental arch is expected to be taken.

The impression tray 10 has an impression taking part 20 and the handle 30 to be constituted. The impression taking part 20 is a portion where an impression material is actually heaped, to be inserted into a patient's oral cavity and shape an impression. The impression taking part 20 includes an outer frame 21, an inner frame 22, a connecting part 23 and a face material 24. On the other hand, the handle 30 is a portion that is held when the impression tray 10 is attached to or detached from an oral cavity and when the impression tray 10 is treated. The handle 30 improves the convenience of an operator. Each constitution will be described below.

As is seen from FIG. 3 etc., the outer frame 21 is a member extending while curving on a planar view. It is preferable that this curve is formed correspondingly to a dental arch, and it is preferable that this curve is almost parallel to the curve of a dental arch and has a size so as to cover a dental arch over the outside of teeth. This makes it possible to arrange patient's rows of teeth and gums between the outer frame 21 and the inner frame 22 described later and to take an impression properly.

As is seen from FIGS. 2, 4, 5 and 6, the outer frame 21 is provided with two members 21 a and 21b that are stacked in the height direction (the vertical direction of each sheet of FIGS. 2, 4, 5 and 6). That is, the outer frame 21 has two members 21 a and 21b that are coupled as if one face of one member that is along its extending direction is stacked on one face of the other member that is along its extending direction. As is seen from FIGS. 4 and 5, these two members 21a and 21b are provided with shapes that are in mirror symmetry having a border of the stacked faces. As described later, one end of the face material 24 is sandwiched between the member 21 a and the member 21b, to be held.

As depicted in FIG. 5, the height T of the outer frame 21 rises from the end at the incisors side. The height T of a portion around the handle 30 is the highest in any other portion of the outer frame 21. This height T is kept for the length L along the direction of extending toward the molars side as depicted in FIG. 3. Then, the outer frame 21 inclines toward the molars side. The height T is preferably no less than 10 mm and no more than 30 mm. The length L is no less than 2 mm and no more than 15 mm. Preferably, L is 10 mm ± 5 mm. More preferably, L is 7 mm ± 4 mm.
This makes it possible to heap an impression material stably. In addition, because a patient can occlude without uncomfortable feeling due to the height gently falling from the incisors part toward the molars part, an impression can be precisely taken.

As depicted in FIGS. 1 and 3, on a face of the outer frame 21 which faces the inner frame 22, a plurality of protrusions 21c are arranged at predetermined intervals. This forms unevenness on the face, and the ability to hold an impression material can be improved.

The inner frame 22 will be described. As is seen from FIG. 3 etc., the inner frame 22 is a member extending while curving on a planar view. It is preferable that this curve is formed so as to have an almost constant distance from the outer frame 21 and is formed correspondingly to a dental arch. It is preferable that this curve has a size so as to cover a dental arch over the rear side of teeth. This makes it possible to arrange patient's rows of teeth and gums between the outer frame 21 and the inner frame 22 and to take an impression properly on an impression material heaped on the face.

As is seen from FIG. 6, the inner frame 22 is provided with two members 22a and 22b that are stacked in the height direction (the vertical direction of the sheet of FIG. 6). That is, the inner frame 22 has two members 22a and 22b that are coupled as if one face of one member that is along its extending direction is stacked on one face of the other member that is along its extending direction. These two members 22a and 22b are provided with shapes that are in mirror symmetry having a border of the stacked faces. As described later, one end of the face material 24 is sandwiched between the member 22a and the member 22b, to be held.

As depicted in FIG. 6, the height of the inner frame 22 is shaped to be equal to or lower than that of a portion of the outer frame 21 which faces a portion where the inner frame 22 exists. This makes it difficult that the inner frame 22 prevents a patient from biting an impression material.

As depicted in FIGS. 1 to 3, on a face of the inner frame 22 which faces the outer frame 21, a plurality of protrusions 22c are arranged at predetermined intervals. This forms unevenness on the face, and the ability to hold an impression material can be improved.

The outer frame 21 and the inner frame 22 can be formed with materials similar to publicly known impression trays. Thus, it is preferable to form the frames with resin.

The connecting part 23 will be described. The connecting part 23 is a member that connects the outer frame 21 and the inner frame 22, to keep their positional relationship. The connecting part 23 in this embodiment is formed by a linear stainless steel. Its one end is fixed to the end part of the outer frame 21 at the molars side, and the other end is fixed to the end of the inner frame 22 at the molars side.

At this time, it is preferable that one end of the connecting part 23 extends from the end face of the outer frame 21 at the molars side and the other end extends from the end face of the inner frame 22 at the molars side. Both ends extend toward the molars side, and curve in the directions facing each other, to be a straight line part that can be connected by a straight line. Here, the direction where the straight line part extends, which is denoted by IIIb-IIIb in FIG. 3, is preferably parallel to a line that connects the end face of the outer frame 21 at the molars side and the end face of the inner frame 22 at the molars side, which is denoted by IIIa-IIIa in FIG. 3. This can prevent the connecting part 23 from curving largely toward the molars side. Thus, it can prevent the connecting part 23 from obstructing that a patient occlude in taking an impression, and precise occlusion and an impression can be taken at the same time.

The connecting part 23 is a member arranged closest to the molars side (back side of the oral cavity). Thus, the connecting part 23 is preferably as thin (narrow) as possible. In such a view, materials having high strength even if they are narrow are preferable, and metal is an example therefor.

The face material 24 will be described. The face material 24 is spread between the outer frame 21 and the inner frame 22. The face material 24 is a member like a face having a function of supporting an impression material. Thus, any material can be used for the face material 24 without specific limitation as long as the material is able to support an impression material. Nonwoven fabric, net and the like are examples therefor.

The face material 24 is spread so as to bridge the outer frame 21 and the inner frame 22. As depicted in FIG. 6, one end part of the face material 24 is fixed so as to be sandwiched between the member 21a and the member 21 b, and the other end part of the face material 24 is fixed so as to be sandwiched between the member 22a and the member 22b. Thereby, on one face side of the face material 24, a concavity part 10a that is surrounded by the member 21 a, the face material 24 and the member 22a is formed, and on the other face side of the face material 24, a concavity part 10b that is surrounded by the member 21b, the face material 24 and the member 22b is formed.

The handle 30 will be described. The handle 30 is a member for an operator holding it to treat the impression tray 10. In this embodiment, the handle 30 is like a plate. One end part of a plate-like body of the handle 30 is fixed to a face of the outer frame 21 at the incisors side so that ends of patient's lips of even a small mouth do not touch and interfere with the handle 30. The handle 30 is arranged so as to extend toward the incisors side.

An impression material can be heaped on each of the concavity parts 10a and 10b, which are formed on the impression tray 10 as described above. The concavity part 10a and the concavity part 10b have a positional relationship of the inside and the outside. Thus, it is possible to make the concavity part 10a and the concavity part 10b correspond to an upper jaw and a lower jaw, respectively. Therefore, an impression of rows of teeth and gums of upper and lower jaws can be taken at the same time.

Here, the impression tray 10 is defined higher at the incisors side of the outer frame 21 as described above. Thus, an impression material can be heaped stably and deeply. It is also possible to take a precise impression of incisors, which requires depth.

### Reference Signs List

- 10: impression tray
- 20: impression taking part
- 21: outer frame
- 22: inner frame
- 23: connecting part
- 24: face material
- 30: handle

## Claims

1. An impression tray that holds an impression material, the impression tray being inserted into an oral cavity to take an impression, the impression tray comprising:
an outer frame that curves and extends from a side to be arranged at an incisors side toward a side to be arranged at a molars side;
an inner frame that curves and extends with a predetermined distance away from the outer frame;
a connecting part that is a linear material that one end of which is fixed to the outer frame and another end of which is fixed to the inner frame, the connecting part keeping a positional relationship between the outer frame and the inner frame;
a face material that is spread over the distance between the outer frame and the inner frame; and
a handle that is arranged at a face of the outer frame, the face being at the side to be arranged at the incisors side,
wherein a portion of the outer frame at the incisors side is formed highest position, height of the portion being kept for no less than 2 mm and no more than 15 mm toward the molars side.

2. The impression tray according to claim 1, wherein
at least part of the connecting part is a portion that extends parallel to a line connecting an end face of the outer frame at the side to be arranged at the molars side and an end face of the inner frame at the side to be arranged at the molars side.
